# EUROPEAN PATENT SPECIFICATION

(11) **EP 2 520 397 B1**
(45) Date of publication and mention of the grant of the patent: **15.08.2018**
(21) Application number: 10840907.9
(22) Date of filing: 20.12.2010
(51) Int. Cl.: B25F 5/00, A01D 34/90

(54) **MOTORIZED TOOL**
MOTORISIERTES WERKZEUG
OUTIL MOTORISÉ

(30) Priority: 28.12.2009 JP 2009298292
(43) Date of publication of application: 07.11.2012
(73) Proprietor: Makita Corporation, Anjo-shi, Aichi 446-8502 (JP)
(72) Inventor: SUDA, Hidekazu, Anjo-shi Aichi 446-8502 (JP); ITO, Ryosuke, Anjo-shi Aichi 446-8502 (JP); KUSAKAWA, Takuya, Anjo-shi Aichi 446-8502 (JP)
(74) Representative: Kramer Barske Schmidtchen Patentanwälte PartG mbB
(86) International application number: PCT/JP2010/072917
(87) International publication number: WO 2011/081050

(56) References cited:
- EP-A2- 0 578 366
- EP-A2- 1 318 596
- JP-A- 7 148 676
- JP-A- 2005 176 454
- US-A1- 2002 127 115

## Description

### TECHNICAL FIELD

The present invention relates to an electric power tool.

### BACKGROUND ART

EP 0 578 366 A2 discloses a controlled braking device for electric motors and in particular portable tools. EP 1 318 596 A2 discloses a motor driving device and a motor driving method.

US-A-2002/0127115 discloses a pump having means for activating a dynamic brake when the pump decelerates below a predefined pump speed.

A conventional brush cutter includes a battery, electric motor, and a cutter (for example, a cutting blade, a nylon cord cutter, etc.), and is configured such that the cutter is connected to a drive shaft of the electric motor via a driving force transmission mechanism (i.e., a gear, a transmission shaft, etc.).

In such a brush cutter, it is required that rotation of the electric motor, and thus of the cutter, is rapidly stopped after stopping of the electric motor is commanded.

As a method for stopping rotation of the cutter, it is disclosed to use regenerative braking in JP 08-66074 U below. In regenerative braking, when current-carrying to a coil of the electric motor is shut off and a short circuit is made between both ends of the coil, a large braking force is generated to a rotor of the electric motor. That is, rotation of the rotor, and thus rotation of the cutter can be stopped rapidly by means of regenerative braking.

### SUMMARY

### PROBLEMS TO BE SOLVED

When rotation of the rotor of the electric motor is rapidly stopped in the above-described brush cutter, recoil caused by kinetic energy owned by the cutter is applied to the driving force transmission mechanism (and thus to a hollow pipe). Then, such recoil may be one reason for reducing usability of the brush cutter.

Therefore, it is an objective to provide an electric power tool that can suppress deterioration of usability of the electric power tool due to braking of the electric motor.

### MEANS FOR SOLVING THE PROBLEMS

An electric power tool in the present teachings, which has been made in order to achieve the above objective, includes an electric motor, a rotation speed detection device, a brake device, and a rotation speed-based activation device.

In the electric power tool, the electric motor generates a driving force to rotate an object to be driven, while the rotation speed detection device detects a rotation speed of the electric motor. When the rotation speed detected by the rotation speed detection device becomes equal to or less than a specified rotation speed, which is arbitrarily set, after a stop command to shut off electric current supply to the electric motor is issued, the rotation speed-based activation device activates the brake device, and the brake device executes braking control to brake the electric motor.

Specifically, in the electric power tool, reduction in the rotation speed of the electric motor, that is, reduction in the kinetic energy owned by the object to be driven during rotation after the stop command is issued is waited, and then the braking control is executed.

In the electric power tool, therefore, recoil applied to the electric power tool due to braking of the electric motor may be reduced since braking of the electric motor is performed after the rotation speed of the electric motor is reduced to the specified rotation speed. That is, according to the electric power tool, deterioration in usability of the electric power tool resulting from braking of the electric motor may be suppressed.

The electric power tool of the present teachings may also include a time-based activation device that activates the brake device when a braking control start time, which is an arbitrarily set time length, has elapsed since a stop command is issued.

In this case, even if the rotation speed of the electric motor is larger than the specified rotation speed, braking control may be executed after the arbitrarily set time has elapsed since the stop command is issued.

The specified rotation speed may be set depending on a state of use of the electric power tool. In this case, the electric power tool of the present teachings may include a specified speed setting device that sets the specified rotation speed.

The electric power tool of the present teachings may further include a reduction rate calculation device that sequentially calculates a reduction rate, which is a rate of reduction in the rotation speed of the electric motor during a unit time period, in accordance with a detection result by the rotation speed detection device. In this case, the specified speed specifying device may be configured to set the specified rotation speed based on the reduction rate calculated by the reduction rate calculation device. The specified speed setting device may set a larger value, as the specified rotation speed, as the reduction rate becomes larger.

Also, the electric motor may be configured to be rotatable in a forward rotation direction and in a reverse rotation direction. In this case, the specified speed setting device preferably sets the specified rotation speed individually for each of the forward rotation direction and the reverse rotation direction.

With the specified speed setting device configured as above, the specified rotation speed may be appropriately set individually for each of the forward rotation direction and the reverse rotation direction.

The braking control start time may be set depending on a state of use of the electric power tool. In this case, the electric power tool of the present teachings preferably includes a time setting device that sets the braking control start time.

With the electric power tool configured as above, the braking control start time may be set by the electric power tool itself.

Further, the electric power tool of the present teachings may include a reduction rate calculation device that sequentially calculates a reduction rate, which is a rate of reduction in the rotation speed of the electric motor during a unit time period, in accordance with a detection result by the rotation speed detection device. In this case, the time setting device is preferably configured to set the braking control start time based on the reduction rate calculated by the reduction rate calculation device.

According to the electric power tool configured as above, it is possible to set the braking control start time depending on the rate of reduction in the rotation speed of the electric motor during a unit time period.

The time setting device preferably sets a shorter time length, as the braking control start time, as the reduction rate becomes larger.

The electric power tool of present teachings may include a rotation speed command switch to set a command value of the rotation speed of the electric motor and a command value obtaining device that obtains the command value set by the rotation speed command switch. In this case, the time setting device may set the braking control start time based on an off-time rotation speed, which is a rotation speed when the command value obtained by the command value obtaining device becomes within a stop range where it is regarded that stopping of the electric motor is commanded.

According to the above-configured electric power tool of the present teachings, it is possible to set the braking control start time depending on a state of use of the electric power tool when an attempt is made to stop the rotation of the electric motor.

In this case, the time setting device preferably sets a longer time length, as the braking control start time, as the off-time rotation speed becomes larger.

With the time setting device configured as above, it is possible to wait until a longer time length has elapsed as the off-time rotation speed is larger, and then execute the braking control.

The electric power tool may include a sensor that directly detects the off-time rotation speed, or may include an estimation device that estimates the off-time rotation speed based on the command value obtained by the command value obtaining device.

When an estimation device is included, the estimation device preferably estimates the off-time rotation speed as a larger value as the command value before the specified time, at which the command value becomes within the stop range, becomes larger.

Also, one of the objects to be driven may be selected from among a plurality of types of objects to be driven, and the electric power tool may be configured such that the object to be driven selected from among the plurality of types of objects to be driven is attachable thereto. In this case the time setting device is preferably configured to set, as the braking control start time of the electric power tool, a braking control start time corresponding to an object to be driven having a maximum inertia among the plurality of types of objects to be driven.

With the time setting device configured as above, it is possible to start braking of the electric motor such that recoil resulting from the braking of the electric motor is suppressed regardless of which one of the plurality of types of objects to be driven is attached to the electric power tool.

Further, the electric motor may be configured to be rotatable in the forward rotation direction and in the reverse rotation direction. In this case, the time setting device is preferably configured to set the braking control start time individually for each of the forward rotation and the reverse rotation.

With the time setting device configured as above, it is possible to set the appropriate braking control start time individually for each of the forward rotation and the reverse rotation.

For example, when the electric power tool is configured such that the rotation speed in the reverse rotation direction is lower as compared with the rotation speed in the forward rotation direction, it is preferable that the braking control start time for the reverse rotation direction is set to a shorter time length as compared with the braking control start time for the forward rotation direction.

That is, even if the electric motor is rotated in the reverse rotation direction at a maximum speed, the kinetic energy owned by the object to be driven during rotation is smaller as compared with a case of rotating the electric motor in the forward rotation direction at a maximum speed. Accordingly, it is possible to execute the braking control at a more appropriate timing even when the electric motor is rotated in the reverse rotation direction by setting the braking control start time for the reverse rotation direction to a smaller value than the braking control start time for the forward rotation direction.

Moreover, the electric power tool of the present teachings may include a driving force transmission mechanism that transmits the driving force of the electric motor to the object to be driven.

According to the electric power tool with such configuration, it is possible to reduce a possibility that an unexpectedly large kinetic energy is exerted on the driving force transmission mechanism. Thus, it is possible to suppress accumulation of fatigue in the driving force transmission mechanism, thereby lengthening the life of the driving force transmission mechanism.

### BRIEF DESCRIPTION OF THE DRAWINGS

FIG. 1 is a perspective view showing an appearance of an electric power tool in a first embodiment.
FIG. 2 is a block diagram showing an electrical configuration of the electric power tool in the first embodiment.
FIG. 3 is a flowchart of a main routine executed by a microcomputer in the first embodiment.
FIG. 4 is a flowchart of an electric motor driving process executed by the microcomputer in the first embodiment.
FIG. 5 is a flowchart showing process steps of an electric motor driving process in a second embodiment.
FIG. 6A is a flowchart showing a part of process steps of an electric motor driving process in a third embodiment.
FIG. 6B is a flowchart showing remaining process steps of the electric motor driving process in the third embodiment.
FIG. 7 is a block diagram showing an electrical configuration of an electric power tool in a fourth embodiment.
FIG. 8 is a block diagram showing an electrical configuration of an electric power tool in a modified example.

### EXPLANATION OF REFERENCE NUMERALS

1, 70... electric power tool 2... shaft pipe 3...motor unit 4...cutter 6...gear unit 7...battery 8... handle 9... right-hand grip 10... left-hand grip 11... lock-off switch 12...trigger switch 13... forward-reverse selector switch 14... control circuit 14A... microcomputer 17, 75...position detection unit 18, 76... electric motor 20, 40... bridge circuit 31-36...gate circuit 77...battery Q1-Q6, Q41-Q44, Q51, Q52... switching device

### MODE FOR CARRYING OUT THE TEACHINGS

Hereinafter, embodiments of the present teachings will be described with reference to the drawings.

### [First Embodiment]

### <Overall Configuration of Electric Power Tool>

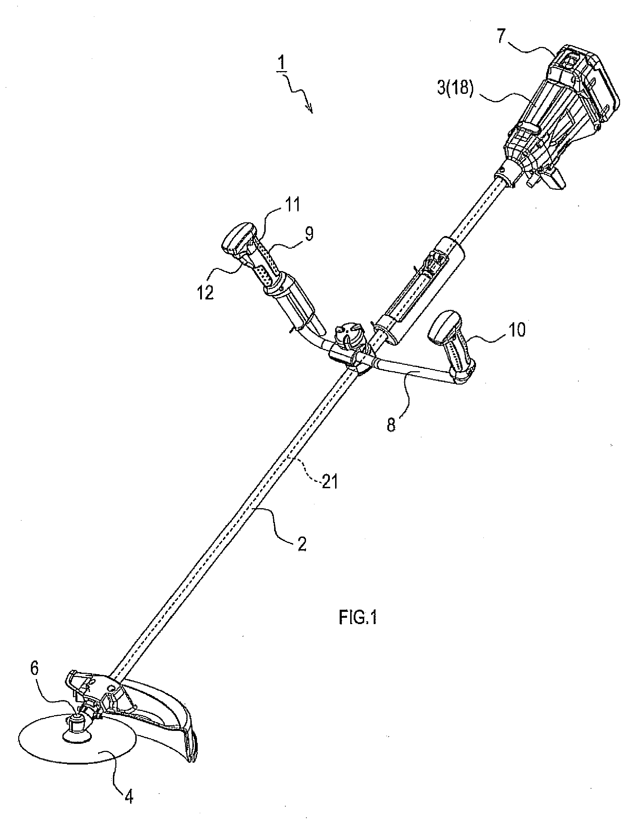

As shown in FIG. 1, an electric power tool 1, which is configured as a so-called brush cutter for cutting weeds and small trees, includes a shaft pipe 2, a motor unit 3, and a cutter 4.

The shaft pipe 2 is formed to be a hollow rod. A motor unit 3 is provided at one end of the shaft pipe 2, while a cutter 4 is provided at the other end of the shaft pipe 2 in a detachable/ attachable manner. Hereinafter, the end of the shaft pipe 2 at which the motor unit 3 is provided is referred to as the "upper end" and the end at which the cutter 4 is provided is referred to as the "lower end".

The cutter 4 as a whole is formed to have substantially a disk-like shape. More specifically, a central portion of the cutter 4 is formed of a material having a rigidity of a predetermined specified value or more (for example, a metal material or a super-hard synthetic resin), and is molded into a disk-like shape or a columnar shape. Also, a periphery of the cutter 4 has a plurality of not-shown blades. The plurality of blades may be thin plates formed of a same material as, or of a different material from the central portion of the cutter 4, or may be resin cords (so-called nylon cords) formed of a synthetic resin in a string shape.

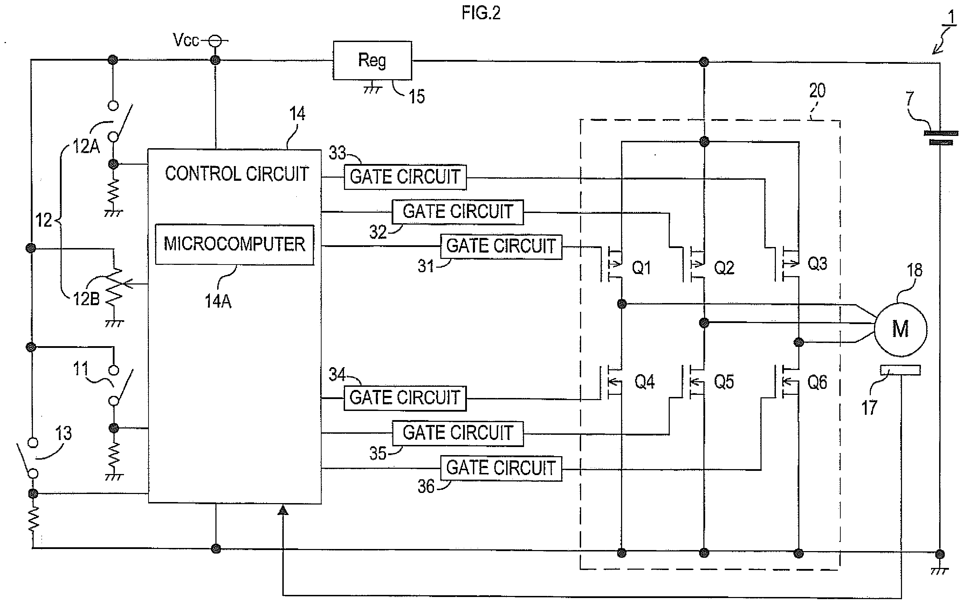

Also, a handle 8 is provided in a vicinity of an axially middle position of the shaft pipe 2. The handle 8 includes a right-hand grip 9 which a user of the electric power tool 1 holds with the right hand and a left-hand grip 10 which the user holds with the left hand. The right-hand grip 9 includes a lock-off switch 11, a trigger switch 12, and a forward-reverse selector switch 13 (see FIG. 2).

The motor unit 3 includes a battery 7 and an electric motor 18.

The battery 7 includes a rechargeable secondary battery (such as a lithium-ion secondary battery) inside the battery 7. The battery 7 is configured to be attachable and detachable to and from the motor unit 3.

In the electric motor 18, when electric current is supplied from the battery 7 to a coil of the electric motor 18, a rotor of the electric motor 18 having a drive shaft is rotated.

A driving force transmission shaft (hereinafter, simply referred to as the "transmission shaft") 21 is housed inside the shaft pipe 2. The transmission shaft 21 is connected to the drive shaft of the electric motor 18 at an upper end of the transmission shaft 21, and is connected to the cutter 4 at a lower end of the transmission shaft 21 via a gear unit 6 including a plurality of gears.

With the above-described configuration, a rotational driving force of the electric motor 18 is transmitted to the cutter 4 via the transmission shaft 21 and the gear unit 6.

### < Electrical Configuration of the Electric Power Tool>

As shown in FIG. 2, the electric power tool 1 includes the above-described electric motor 18, a bridge circuit 20, six gate circuits 31-36, and a control circuit 14.

The electric motor 18 is configured as a well-known three-phase brushless DC motor. When an electric current is sequentially supplied to coils for respective phases U, V, and W, the rotor of the electric motor 18 is rotated. The electric motor 18 in the first embodiment includes a position detection unit 17 for detecting a rotation angle of the rotor. The position detection unit 17 includes a well-known Hall element.

The coils for the respective phases U, V, and W of the electric motor 18 are connected to the battery 7 via the bridge circuit 20.

The bridge circuit 20 is a well-known three-phase bridge circuit, including six switching devices Q1-Q6. In the bridge circuit 20, a pair of serially connected switching devices Q1, Q4, a pair of serially connected switching devices Q2, Q5, and a pair of serially connected switching devices Q3, Q6 are parallely connected among one another between a positive electrode and a negative electrode of the battery 7. Also, the coils for the respective phases U, V, and W of the electric motor 18 are connected, respectively, to a point between the switching devices Q1 and Q4, a point between the switching devices Q2 and Q5, and a point between the switching devices Q3 and Q6.

Specifically, the bridge circuit 20 is configured to be capable of driving the rotor of the electric motor 18 in any rotation direction from a forward rotation direction and a reverse rotation direction by appropriate control of on/off of the switching devices Q1-Q6. The forward rotation direction here means a direction of rotating the cutter 4 at the time of cutting weeds and small trees. In contrast, the reverse rotation direction means a rotation direction which is opposite to the forward rotation direction and used when removing weeds or the like tangled in the cutter 4. In this regard, the electric power tool 1 in the first embodiment is configured such that a rotation speed in the reverse rotation direction is lower than a rotation speed in the forward rotation direction.

The gate circuits 31-36 are configured to appropriately turn on/off the respective switching devices Q1-Q6 in the bridge circuit 20 in accordance with drive signals inputted from the control circuit 14 to the gate circuits 31-36, respectively.

The control circuit 14 includes a well-known microcomputer 14A provided with a CPU, a memory, an I/O, etc.

A constant voltage power circuit (Reg) 15 is connected to the control circuit 14, and the control circuit 14 is configured to operate by a predetermined control voltage Vcc (for example, 5VDC) generated by reducing a direct current voltage (for example, 36VDC) of the battery 7 by means of the Reg 15.

The lock-off switch 11, the trigger switch 12, and the forward-reverse selector switch 13 are connected to the control circuit 14.

The lock-off switch 11 is a switch to prevent the user of the electric power tool 1 from erroneously driving the electric motor 18. More specifically, when the lock-off switch 11 is turned off, a logical level of a voltage of a signal (a drive inhibition signal) inputted from the lock-off switch 11 to the control circuit 14 is set to a low level (that is, driving of the electric motor 18 is inhibited), while when the lock-off switch 11 is turned on, the logical level of the voltage of the drive inhibition signal is set to high level (driving of the electric motor 18 is permitted).

The forward-reverse selector switch 13 is a switch with which the user of the electric power tool 1 sets the rotation direction of the rotor of the electric motor 18 to one of the forward rotation direction and the reverse rotation direction. When the forward-reverse selector switch 13 is turned off, a logical level of a voltage of a signal (a forward rotation signal) inputted from the forward-reverse selector switch 13 to the control circuit 14 is set to a low level, while when the forward-reverse selector switch 13 is turned on, the logical level of the voltage of the forward rotation signal is set to a high level.

The trigger switch 12, which includes a contact switch 12A and a variable resistor 12B, is configured to output to the control circuit 14 a signal (an operation signal) indicating whether or not the trigger switch 12 has been pulled and a signal (a speed command value Cv) having a voltage depending on an operation amount (a trigger stroke) of the trigger switch 12.

Also, a memory of the microcomputer 14A stores programs for various processes to be executed by the microcomputer 14A. In a later-described electric motor driving process, as one of the various processes, gate circuits 31-36 are controlled such that an electric current having an amount depending on the speed command value Cv is made to flow through the coils for the respective phases U, V, and W of the electric motor 18, and that when a predetermined specified condition is satisfied, a braking force is applied to the rotor of the electric motor 18.

The memory of the microcomputer 14A also stores various threshold values Th necessary for determining whether or not the specified condition is satisfied.

That is, the control circuit 14 outputs a drive signal to each of the gate circuits 31-36 such that the rotor of the electric motor 18 is rotated at a rotation speed depending on the speed command value Cv from the trigger switch 12 when both of the lock-off switch 11 and the trigger switch 12 are on.

### <Process in Control Circuit >

Hereinafter, a process executed by the control circuit 14 (or more precisely, by the microcomputer 14A) will be described.

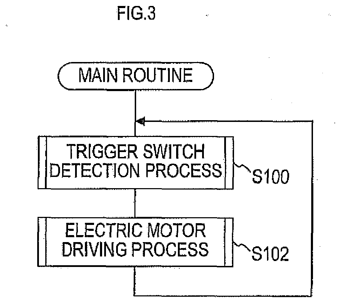

A main routine shown in FIG. 3 is activated when the lock-off switch 11 is turned on in the first embodiment. However, the main routine may be activated when the battery 7 is attached to the electric power tool 1 or when the trigger switch 12 is pulled.

As shown in FIG. 3, in the main routine, a trigger switch detection process (S100) and an electric motor driving process (S102) are sequentially executed in a repeated manner.

In the trigger switch detection process, the speed command value Cv inputted from the trigger switch 12 is detected. More specifically, a resistance value of the variable resistor 12B varies depending on an operation amount of the trigger switch 12 by the user, and a voltage depending on the resistance value is detected as the speed command value Cv.

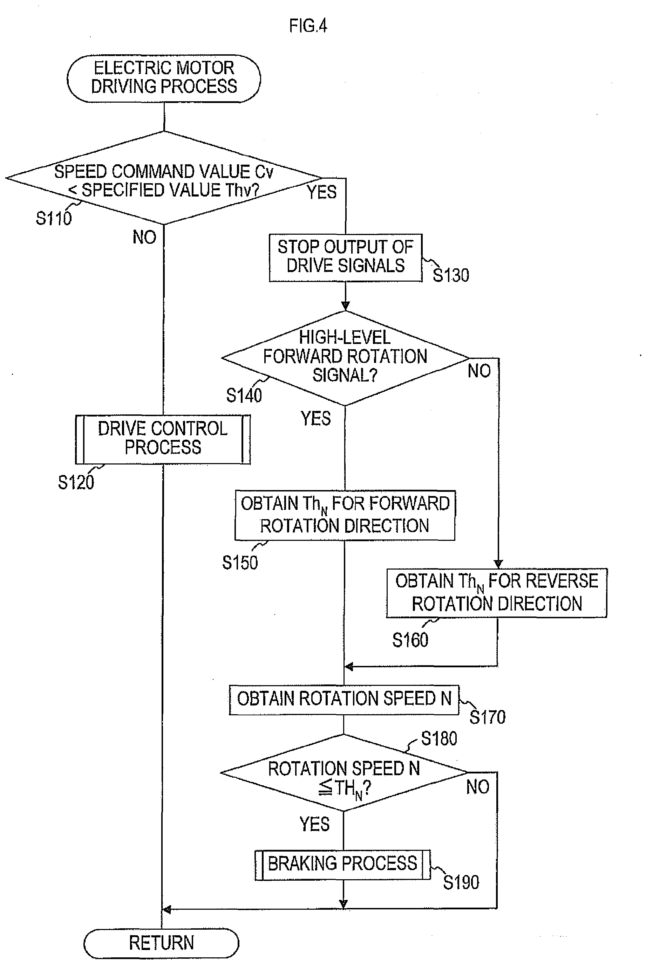

Subsequently, as shown in FIG. 4, in the electric motor driving process, it is determined whether or not the speed command value Cv detected in the trigger switch detection process (S100) is less than a specified value Thv, which is a previously specified threshold value (S110). The specified value Thv is a minute speed command value Cv based on which it can be considered that the trigger switch 12 is turned off. Accordingly, when the speed command value Cv is a value from 0 [V] to less than the specified value Thv (an example of a stop range in the present teachings), the microcomputer 14A determines that a stop command of the electric motor 18 has been issued, and stops output of the drive signals to the gate circuits 31-36.

When it is determined in S110 that the speed command value Cv is equal to or more than the specified value Thv (S110: NO), the present process proceeds to S120. That is, if it can be considered that both of the lock-off switch 11 and the trigger switch 12 are on, the present process proceeds to S120.

In S120, a previously defined drive control process is executed. The drive control process is a well-known process to output, to the gate circuits 31-36, drive signals that cause an electric current depending on the speed command value Cv to flow through the coils for the respective phases U, V, and W of the electric motor 18. When the drive control process is executed, the rotor of the electric motor 18 is rotated at a rotation speed (indicated by a rotation number per a unit time (e.g., one minute) in the first embodiment) in accordance with a trigger stroke (i.e., an operation amount) of the trigger switch 12. After the process in S120 is completed, the present electric motor driving process is terminated.

When it is determined in S110 that the speed command value Cv is less than the specified value Thv, i.e., the trigger switch 12 is off (S110: YES), the present process proceeds to S130. In S130, output of the drive signals is stopped. As a result, the gate circuits 31-36 turn off all the switching devices Q1-Q6, and the electric current to each of the coils for the respective phases U, V, and W of the electric motor 18 is shut off. Accordingly, the rotor of the electric motor 18 rotates through inertia after the shutoff of the electric current.

Subsequently, in S140, it is determined whether or not a forward rotation signal from the forward-reverse selector switch 13 is high level. When it is determined that the forward rotation signal is high level (S140: YES), then it is determined that a rotation direction of the rotor of the electric motor 18 is a forward rotation direction, and the present process proceeds to S150.

In S150, a specified rotation speed Th_{N} which is a previously specified threshold value is obtained. The specified rotation speed Th_{N} is set as a rotation speed at which braking of the rotor of the electric motor 18 should be started. In the first embodiment, a rotation speed, at which braking of the rotor should be started when a cutter having a largest inertia among a plurality of types of cutters attachable to the electric power tool 1 is attached to the electric power tool 1, is set as the specified rotation speed Th_{N}. Also, in the first embodiment, a value in a case where the rotation direction of the rotor of the electric motor 18 is a forward rotation direction and a value in a case where the rotation direction is a reverse rotation direction are set individually as the specified rotation speed Th_{N}. The specified rotation speed Th_{N} corresponding to the forward rotation direction may have the same value as that of the specified rotation speed Th_{N} corresponding to the reverse rotation direction, or may have a different value from that of the specified rotation speed Th_{N} corresponding to the reverse rotation direction.

When it is determined in S140 that the forward rotation signal from the forward-reverse selector switch 13 is low-level (S140: NO), it is determined that the rotation direction of the rotor of the electric motor 18 is the reverse rotation direction. Then, the present process proceeds to S160, in which the specified rotation speed Th_{N} corresponding to the reverse rotation direction is obtained.

Subsequently in S170, a rotation speed N [rpm] of the rotor of the electric motor 18 at the time is obtained based on an output from the position detection unit 17.

Then in S180, it is determined whether or not the rotation speed N obtained in S170 is equal to or less than the specified rotation speed Th_{N} obtained in either S150 or S160. When it is determined that the rotation speed N is equal to or less than the specified rotation speed Th_{N} (S180: YES), the present process proceeds to S190.

In S190, a previously defined braking process is executed. The braking process is a process to output to the gate circuits 31-36 such drive signals that turn on all the switching devices in either a group of the switching devices Q1-Q3 constituting the bridge circuit 20 or a group of the switching devices Q4-Q6 constituting the bridge circuit 20. When the braking process is executed, the coils for the respective phases U, V, and W of the electric motor 18 form short circuits. Then, a braking force is applied to the rotor of the electric motor 18 which is rotating through inertia, by so-called regenerative braking. When the process in S190 is completed, the present subroutine is terminated.

When it is determined in S180 that the rotation speed N exceeds the specified rotation speed Th_{N}, the electric motor driving process is terminated without executing S190.

### [Effects of First Embodiment]

As described above, in the electric motor driving process of the first embodiment, the braking process is executed when the rotation speed N becomes equal to or less than the specified rotation speed Th_{N} after electric current supply to the coils for the respective phases U, V, and W of the electric motor 18 is stopped.

That is to say, in the electric motor driving process of the first embodiment, it is waited that kinetic energy owned by the cutter 4 rotating through inertia is reduced to equal to or less than a predetermined value, and then the braking process is executed.

Particularly in the electric motor driving process of the first embodiment, the specified rotation speed Th_{N} to be compared with the rotation speed N is a value corresponding to a cutter having a maximum inertia moment about the drive shaft of the electric motor 18 as a rotation center among the various types of cutters attachable to the electric power tool 1. Accordingly, regardless of the cutter attached to the electric power tool 1, the braking process may be executed after the kinetic energy in the cutter during rotation becomes equal to or less than the predetermined value.

As a result, according to the electric power tool 1 of the first embodiment, the braking force is applied to the rotor after the rotation speed N is reduced, and thereby recoil exerted on the electric power tool 1 due to the braking force may be reduced. Thus, deterioration in usability of the electric power tool 1 resulting from braking of the electric motor 18 may be suppressed.

Also, according to the electric power tool 1, it is possible to suppress an unexpectedly large kinetic energy from being exerted on the transmission shaft or the gears in the gear unit 6. Thus, it is possible to suppress fatigue accumulated in the transmission shaft and the gears, and thereby lengthen the lives of the transmission shaft and the gears.

In the first embodiment, the cutter 4 is an example of an object to be driven in the present teachings, S170 in the electric motor driving process is an example of a rotation speed detection device in the present teachings, S190 is an example of a brake device in the present teachings, and S180 is an example of a rotation speed-based activation device in the present teachings.

Further, in the first embodiment, S150 and S160 are examples of a specified speed setting device in the present teachings, the trigger switch 12 is an example of a rotation speed command switch in the present teachings, S100 in the main routine is an example of a command value obtaining device in the present teachings.

### [Second Embodiment]

Next, a second embodiment of the present teachings will be described.

An electric power tool described in the second embodiment is different from the electric power tool 1 described in the first embodiment only in terms of the electric motor driving process executed by the control circuit 14.

In the second embodiment, therefore, the electric motor driving process which is different from the electric power tool 1 of the first embodiment will be mainly described, while the same constitutions as in the electric power tool 1 of the first embodiment will be assigned the same reference numerals and descriptions thereof will be omitted.

### <Electric Motor Driving Process>

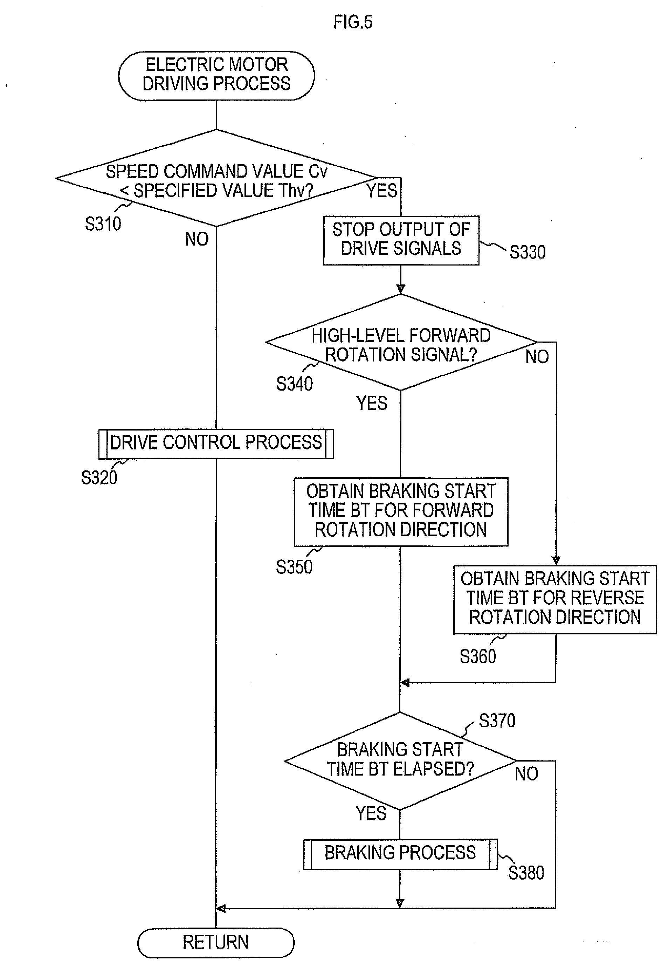

As shown in FIG. 5, in the electric motor driving process in the second embodiment, it is first determined whether or not the speed command value Cv is less than a specified value Thv (S310).

When it is determined in S310 that the speed command value Cv is equal to or more than the specified value Thv (S310: NO), the present process proceeds to S320. Specifically, if it can be considered that both of the lock-off switch 11 and the trigger switch 12 are on, the present process proceeds to S320.

In S320, the drive control process is executed. The drive control process in the second embodiment is the same process as the drive control process described in the first embodiment. After completing the process in S320, the present electric motor driving process is terminated.

When it is determined in S310 that the speed command value Cv is less than the specified value Thv (S310: YES), it is determined that the trigger switch 12 has been turned off, and the present process proceeds to S330. In S330, output of the drive signals is stopped. Specifically, the gate circuits 31-36 turn off all the switching devices Q1-Q6, to thereby shut off the electric current to the coils for the respective phases U, V, and W of the electric motor 18.

Subsequently in S340, it is determined whether or not the forward rotation signal from the forward-reverse selector switch 13 is high level. When it is determined that the forward rotation signal is high level (S340: YES), it is determined that the rotation direction of the rotor of the electric motor 18 is the forward rotation direction, and the present process proceeds to S350.

In S350, a braking start time BT (an example of a braking control start time in the present teachings), which is a previously specified time length, is obtained. The time length specified as the braking start time BT is a time length required from when the trigger switch 12 is turned off until the kinetic energy owned by the cutter 4 becomes equal to or less than a predetermined set value. The kinetic energy owned by the cutter 4 is mentioned here based on an assumption that the cutter 4 is rotating at a maximum speed of the electric motor 18. A time length from when the trigger switch 12 is turned off until the kinetic energy owned by a cutter, which has a maximum inertia among the plurality of types of cutters attachable to the electric power tool 1, becomes equal to or less than a predetermined set value is set as the braking start time BT in the second embodiment.

In the second embodiment, a braking start time BT in a case where the rotation direction of the rotor of the electric motor 18 is the forward rotation direction, and a braking start time BT in a case where the rotation direction is the reverse rotation direction are individually set. For example, the braking start time BT for the reverse rotation direction is specified as a shorter time length than the braking start time BT for the forward rotation direction.

In S350 of the second embodiment, the braking start time BT for the forward rotation direction is obtained.

On the other hand, when it is determined in S340 that the forward rotation signal from the forward-reverse selector switch 13 is low-level (S340: NO), it is determined that the rotation direction of the rotor of the electric motor 18 is the reverse rotation direction, and the present process proceeds to S360, in which a braking start time BT for the reverse rotation direction is obtained.

Subsequently in S370, it is determined whether or not an elapsed time since the trigger switch 12 is turned off is longer than the braking start time BT. When it is determined that the elapsed time is longer than the braking start time BT (S370: YES), the present process proceeds to S380. That is, when the braking start time BT has elapsed since the trigger switch 12 is turned off, the present process proceeds to S380.

In S380, a previously defined braking process is executed. The braking process executed in the second embodiment is the same process as the braking process described in the first embodiment. After completing the process in S380, the present electric motor driving process is terminated.

When it is determined in S370 that the braking start time BT has not elapsed since the trigger switch 12 is turned off (S370: NO), the electric motor driving process is promptly terminated without executing the braking process in S380.

### [Effects of Second Embodiment]

In the electric motor driving process of the second embodiment, as described above, the braking process is executed when the braking start time BT has elapsed since the trigger switch 12 is turned off.

Particularly, the braking start time BT in the second embodiment is set as the time length required until when the kinetic energy owned by the cutter 4 during rotation becomes equal to or less than a predetermined set value.

Accordingly, also in the electric motor driving process of the second embodiment, reduction in kinetic energy owned by the cutter 4 rotating through inertia to equal to or less than the predetermined value is waited for, and then the braking process is executed in the same manner as in the electric motor driving process described in the first embodiment.

As a result, the same effects as in the electric power tool 1 of the first embodiment may be achieved also in the electric power tool of the second embodiment.

The electric power tool of the second embodiment is configured such that the rotation speed in the reverse rotation direction is lower than the rotation speed in the forward rotation direction. As a result, even if the rotor is rotated in the reverse rotation direction at a maximum speed, the kinetic energy owned by the rotating cutter is smaller than in a case where the rotor is rotated in the forward rotation direction at a maximum speed. Also, in the second embodiment, the braking start time BT for the reverse rotation direction is specified as a shorter time length than the braking start time BT for the forward rotation direction.

Therefore, according to the electric power tool of the second embodiment, the braking process can be executed at an appropriate timing even when the rotor is rotated in the reverse rotation direction.

Further, the braking start time BT for the reverse rotation direction may be the same as or different from the braking start time BT for the forward rotation direction.

In the second embodiment, S370 in the electric motor driving process is an example of a time-based activation device in the present teachings, and S350 and S360 are an example of a time setting device in the present teachings.

### [Third Embodiment]

Next, a third embodiment of the present teachings will be described.

An electric power tool of the third embodiment is different from the electric power tool 1 described in the first and second embodiments only in the electric motor driving process executed by the control circuit 14.

In the third embodiment, therefore, the description will be given mainly on the electric motor driving process, which is different from that in the electric power tool 1 described in the first and second embodiments, and the same constitutions as those in the electric power tool 1 described in the first and second embodiment will be assigned the same reference numerals, respectively, and will not be described further.

### <Electric Motor Driving Process>

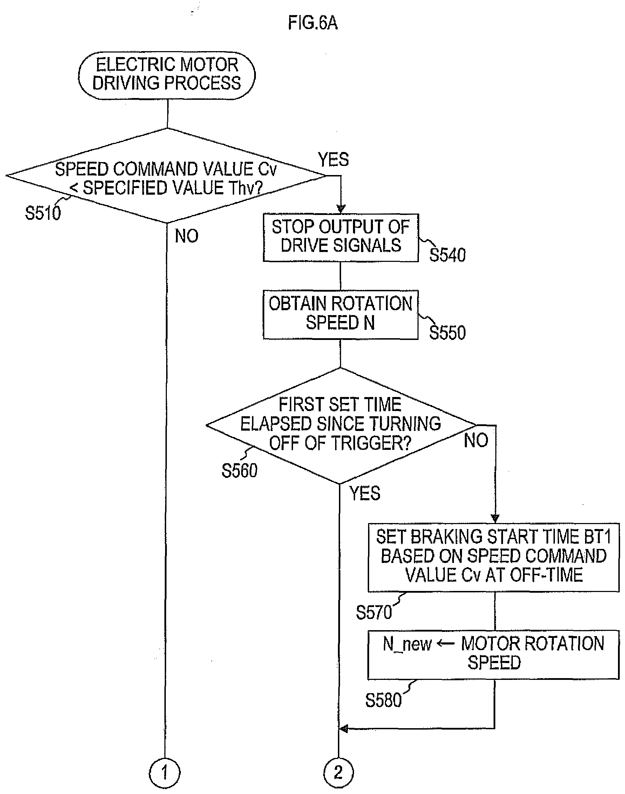

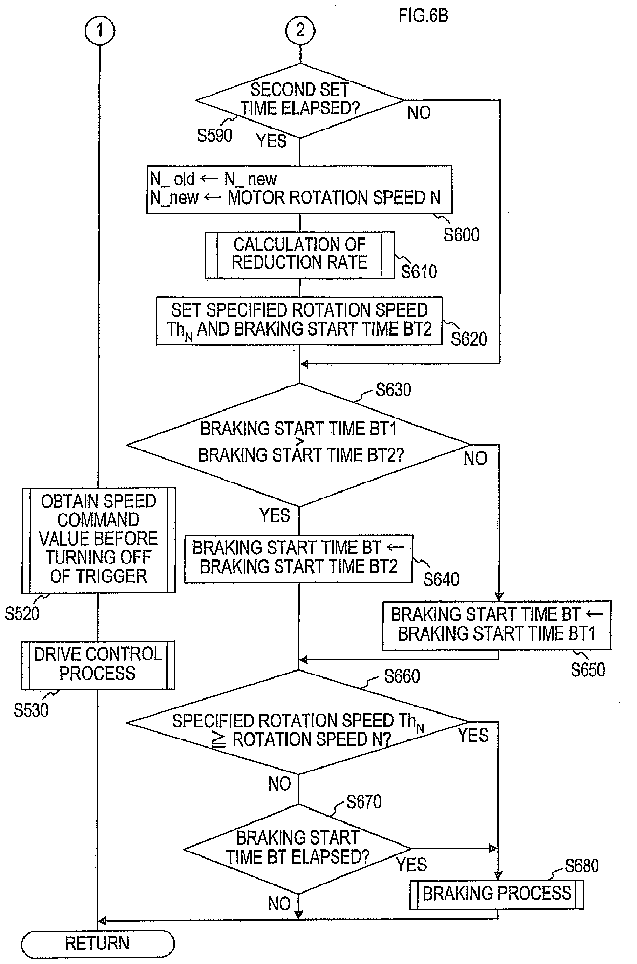

As shown in FIG. 6A-6B, in the electric motor driving process of the third embodiment, it is first determined whether or not the speed command value Cv is less than a specified value Thv (S510). When it is determined in S510 that the speed command value Cv is equal to or more than the specified value Thv (S510: NO), the present process proceeds to S520. Specifically, if it can be considered that both of the lock-off switch 11 and the trigger switch 12 are on, the present process proceeds to S520.

In S520, a speed command value Cv before the speed command value Cv becomes less than the specified value Thv, that is, before the trigger switch 12 is turned off is obtained, in order to use the value in S570 described later.

Subsequently in S530, the drive control process is executed. The drive control process of the third embodiment is the same as the drive control process described in the first and second embodiments. After completing the process in S530, the present electric motor driving process is terminated.

When it is determined in S510 that the speed command value Cv is less than the specified value Thv (S510: YES), it is determined that the trigger switch 12 is turned off, and the present process proceeds to S540. In S540, output of the drive signals is stopped. More specifically, the gate circuits 31-36 turn off all of the switching devices Q1-Q6, to thereby shut off electric current to the coils for the respective phases U, V, and W in the electric motor 18.

Subsequently in S550, a rotation speed N, at a current time point, of the rotor of the electric motor 18 is obtained based on an output from the position detection unit 17.

Subsequently in S560, it is determined whether or not a first set time, which is a previously specified time length (for example, several dozen [ms]), has elapsed since it is first determined in S510 that the speed command value Cv is less than the specified value Thv. When it is determined in S560 that the first set time has not elapsed (S560: NO), the present process proceeds to S570. That is, a condition for proceeding to S570 is that it is immediately after the trigger switch 12 is turned off.

In S570, a braking start time BT1 is set based on the speed command value Cv immediately before the trigger switch 12 is turned off (hereinafter, referred to as an "off-time command value Cvf"), which has been obtained in S520.

The braking start time BT1 is a time length required from when the trigger switch 12 is turned off until the kinetic energy owned by the cutter 4 during rotation becomes equal to or less than a predetermined set value. In S570, the larger the off-time command value Cvf is, the longer the time length is set to be. The off-time command value Cvf is a speed command value Cv at a previously specified time (for example, several [ms]) before a time point when it is first determined in S510 that the speed command value Cv is less than the specified value Thv.

More specifically, in S570, the faster the rotation speed of the rotor immediately after the trigger switch 12 is turned off, the larger the kinetic energy owned by the cutter 4 during rotation becomes, and thus, a longer time length is set as the braking start time BT1.

Subsequently in S580, the rotation speed N of the motor 12 is set to a first rotation speed N_new, and the present process proceeds to S590.

If it is determined in 560 that the first set time has elapsed since it is determined in S510 that the speed command value Cv is less than the specified value Thv, the present process also proceeds to S590.

Then in S590, it is determined whether or not a second set time, which is a previously specified time length (for example, several dozen [ms]), has elapsed since the present process proceeds to S600 last time. When it is determined that the second set time has elapsed (S590: YES), the present process proceeds to S600.

In S600, the rotation speed N, which has been set to the first rotation speed N_new from when S600 is executed last time until when the present process proceeds to S600 this time, is treated as a second rotation speed N_old. Also in S600, the rotation speed N obtained in S550 is set to the first rotation speed N_new. That is, once the present process proceeds to S600, an earlier obtained rotation speed N is treated as the second rotation speed N_old, while a later obtained rotation speed N is treated as the first rotation speed N_new as the time passes.

When S600 is executed for the first time, a value of the first rotation speed N_new set in S580 is an initial value of the first rotation speed N_new.

Subsequently in S610, a reduction rate at which the rotation speed reduces from the second rotation speed N_old to the first rotation speed N_new during a predetermined unit time period is calculated.

In S620, a specified rotation speed and a braking start time which correspond to the reduction rate calculated in S610 are set as the specified rotation speed Th_{N} and the braking start time BT2, respectively.

The specified rotation speed which corresponds to the reduction rate is a rotation speed of the rotor associated with the reduction rate. It is to be noted that the rotation speed corresponding to the reduction rate, which is a rotation speed at which the kinetic energy owned by the cutter 4 during rotation is equal to or less than the predetermined set value, becomes larger as the reduction rate becomes larger.

This is because the kinetic energy in the cutter 4 during rotation has lower tendency to decrease and a time required until the kinetic energy becomes equal to or less than a predetermined set value will be longer as the reduction rate becomes smaller.

The braking start time which corresponds to the reduction rate is a time length associated with the reduction rate. It is to be noted that the time length associated with the reduction rate, which is a time length required from when the trigger switch 12 is turned off until the kinetic energy owned by the cutter 4 during rotation becomes equal to or less than the predetermined set value, will be shorter as the reduction rate becomes larger.

After setting the specified rotation speed Th_{N} and the braking start time BT2 in S620 as described above, the present process proceeds to S630.

In S630, it is determined whether or not the braking start time BT2 set in S620 is smaller than the braking start time BT1 set in S570. When it is determined in S630 that the braking start time BT2 is smaller than the braking start time BT1 (S630: YES), the present process proceeds to S640. When it is determined in S630 that the braking start time BT2 is equal to or more than the braking start time BT1 (S630: NO), the present process proceeds to S650. If the present process proceeds to S630 without ever executing the process in S620, no appropriate value is set as the braking start time BT2. Therefore, it is determined in S630 that the braking start time BT2 is equal to or more than the braking start time BT1.

In S640, the braking start time BT2 is set as the braking start time BT to be used for determination in S670 as described later. Then, the present process proceeds to S660. On the other hand, in S650, the braking start time BT1 is set as the braking start time BT to be used for determination in S670. Then, the present process proceeds to S660.

When it is determined in S590 that the second set time has not elapsed since a time when the present process proceeds to S600 last time, the present process proceeds to S630 without executing the processes in S600 to S620.

In S660, it is determined whether or not the rotation speed N obtained in S550 is equal to or less than the specified rotation speed Th_{N} set in S620. When it is determined that the rotation speed N is larger than the specified rotation speed Th_{N} (S660: NO), the present process proceeds to S670. If the present process proceeds to S660 without ever executing the process in S620, it is determined in S660 that the rotation speed N is larger than the specified rotation speed Th_{N}.

Then in S670, it is determined whether or not an elapsed time since the trigger switch 12 is turned off is longer than the braking start time BT set in S640 or S650. When it is determined that the elapsed time is longer than the braking start time BT (S670: YES), the present process proceeds to S680. That is, the present process proceeds to S680 when the braking start time BT has elapsed since the trigger switch 12 is turned off. Also, when it is determined in S660 that the rotation speed N is equal to or less than the specified rotation speed Th_{N} (S660: YES), the present process proceeds to S680.

In S680, a braking process is executed. The braking process executed in the third embodiment is the same as the braking process described in the first and second embodiments. After completing the process in S680, the present electric motor driving process is terminated.

When it is determined in S670 that the braking start time BT has not elapsed since the trigger switch 12 is turned off (S670: NO), the present electric motor driving process is terminated without executing the braking process in S680.

### [Effects of Third Embodiment]

As described above, in the electric motor driving process of the third embodiment, the braking process is executed when the braking start time BT has elapsed since the trigger switch 12 is turned off, or when the rotation speed N becomes equal to or less than the specified rotation speed Th_{N}.

That is to say, in the electric motor driving process of the third embodiment, the braking process is executed after waiting for the kinetic energy owned by the cutter 4 rotating through inertia to be reduced to equal to or less than a set value.

Therefore, according to the electric power tool of the third embodiment, it is also possible to suppress an unexpectedly large kinetic energy (stress) from being exerted on the transmission shaft or the gears in the gear unit 6, in a same manner as in the electric power tool of the first embodiment or the second embodiment.

Further, according to the electric power tool of the third embodiment, the reduction rate to be used for setting the braking start time BT and the specified rotation speed Th_{N} is calculated each time the second set time has elapsed since the trigger switch 12 is turned off.

Consequently, according to the electric power tool of the third embodiment, the braking process can be executed at an appropriate timing depending on a load.

Particularly in the electric motor driving process of the third embodiment, setting of the braking start time BT is executed immediately after the trigger switch 12 is turned off. Therefore, according to the electric power tool of the third embodiment, it is possible to specify the braking start time BT depending on a state of use of the electric power tool when an attempt is made to stop the rotation of the rotor of the electric motor 18.

In the third embodiment, S610 in the electric motor driving process is an example of a reduction rate calculation device in the present teachings, S620 is an example of a specified speed setting device and a time setting device in the present teachings, and S570 is an example of an estimation device in the present teachings.

### [Fourth Embodiment]

Next, a fourth embodiment of the present teachings will be described.

An electric power tool of the fourth embodiment has a different electric motor and a different electrical configuration for driving the electric motor as compared with the electric power tool 1 described in the first to third embodiments.

Therefore, in the fourth embodiment, the different electric motor and the different electrical configuration for driving the electric motor from those in the electric power tool 1 of the first to third embodiments will be mainly described, and the same configurations and processes as in the electric power tool 1 of the first to third embodiments will be assigned the same reference numerals and further description thereof will be omitted.

### <Electrical Configuration of Electric Power Tool>

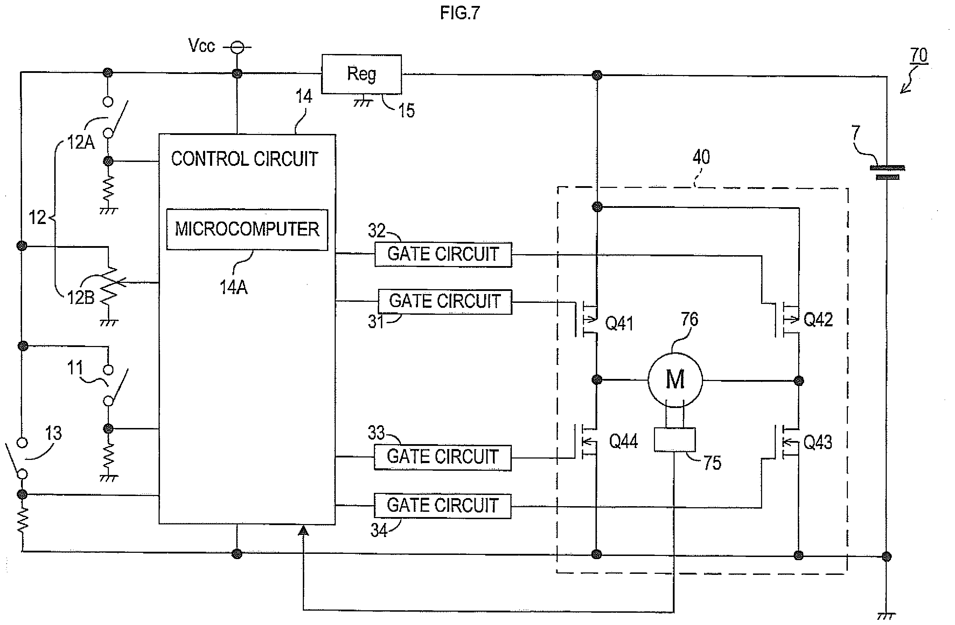

FIG. 7 is a block diagram showing the electrical configuration of the electric power tool in the fourth embodiment.

As exemplarily shown in FIG. 7, an electric power tool 70 in the fourth embodiment includes an electric motor 76 configured as a brushed DC motor.

A position detection unit 75 to detect a rotation angle of the drive shaft is provided to a drive shaft of the electric motor 76. The position detection unit 75 includes a well-known encoder (a so-called rotary encoder), and outputs a detection signal from the encoder to the control circuit 14.

The electric motor 76 is connected to the battery 7 through a bridge circuit 40. The bridge circuit 40 is a well-known H bridge circuit constituted by four switching devices Q41-Q44.

A rotor of the electric motor 76 rotates in the forward rotation direction when the switching device Q41 and the switching device Q43 are turned on, and rotates in the reverse rotation direction when the switching device Q42 and the switching device Q44 are turned on.

### <Braking Process>

In a braking process of the fourth embodiment, drive signals are outputted to the gate circuits 31-34 so as to turn on only one of a group of the switching devices Q41 and Q42 which function as high-side switches, and a group of the switching devices Q43 and Q44 which function as low-side switches. Due to such braking process, a short circuit is made between both ends of a coil of the electric motor 76. As a result, a so-called regenerative braking occurs, and a braking force is applied to the rotor of the electric motor 76 during rotation through inertia.

### [Effects of Fourth Embodiment]

As described above, in the electric power tool 70 of the fourth embodiment, the brushed DC motor is used as a power source to rotate the cutter 4, and the H bridge circuit is used as a drive circuit to drive the brushed DC motor.

Also in a case where the electric power tool 70 is configured as above, it is possible to apply a braking force to the rotor of the electric motor 76 after the kinetic energy owned by the rotating cutter 4 is reduced to equal to or less than a set value in a same manner as in the electric power tool 1 described in the first to third embodiments.

### [Other Embodiments]

Although some embodiments of the present teachings have been described above, the present teachings should not be limited to the first to fourth embodiments, but may be implemented in various forms within the scope not departing from the gist of the present teachings.

For example, while setting of the specified rotation speed Th_{N} and the braking start time BT is not performed depending on the rotation direction of the rotor of the electric motor 18 in the electric motor driving process of the third embodiment, setting of the specified rotation speed Th_{N} and the braking start time BT may be performed depending on the rotation direction of the rotor of the electric motor 18 also in the electric motor driving process of the third embodiment. That is, process steps corresponding to S140-S160 in the first embodiment or process steps corresponding to S340-S360 in the second embodiment may be executed.

Alternatively, while the specified rotation speed Th_{N} and the braking start time BT are set depending on the rotation direction of the rotor of the electric motor 18 in the electric motor driving process of the first and second embodiments, the specified rotation speed Th_{N} and the braking start time BT need not be changed depending on the rotation direction of the rotor in the electric motor driving process of the first and second embodiments. That is, S140-S160 in the first embodiment and S340-S360 in the second embodiment may be omitted.

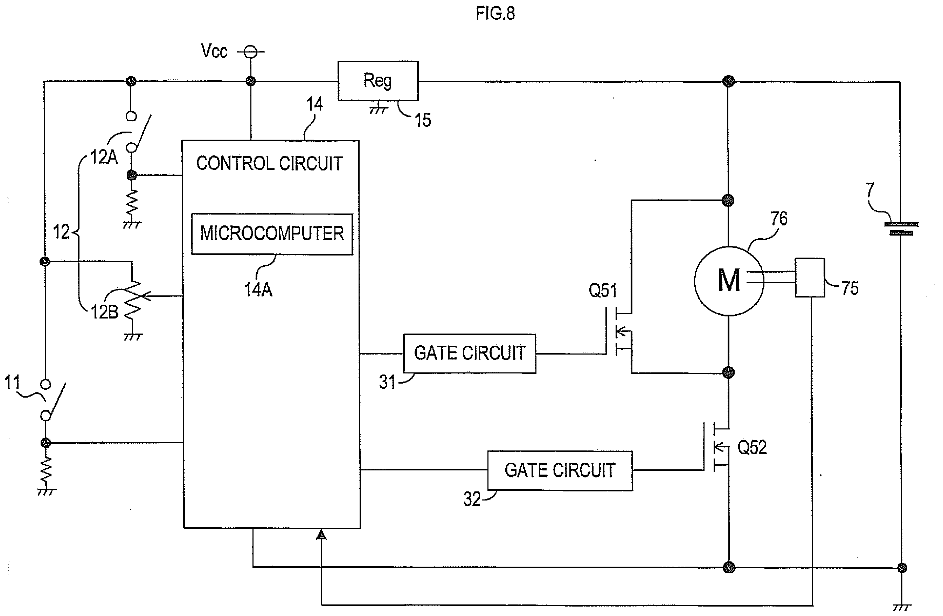

In this case, the electric motor 76 may be used as a power source to rotate the cutter 4 and a drive circuit shown in FIG. 8 may be used as a drive circuit to drive the electric motor 76 in the electric power tool 1.

The drive circuit shown in FIG. 8 includes two switching devices Q51 and Q52. The switching device Q52 is provided in series on an electric current path from the battery 7 to the electric motor 76, while the switching device Q51 is provided in parallel with the electric motor 76. In the switching device Q51, a drain of the switching device Q51 is connected to a positive electrode of the battery 7, while a source of the switching device Q51 is connected to between a drain of the switching device Q52 and a terminal of the electric motor 76.

That is, when the switching device Q51 is turned off and only the switching device Q52 is turned on, electric current is supplied to the coil of the electric motor 76, and the rotor of the electric motor 76 is rotated.

However, when the switching device Q52 is turned off and only the switching device Q51 is turned on, current supply from the battery 7 to the coil of the electric motor 76 is shut off, and a short circuit is made between both ends of the coil. As a result, a so-called regenerative braking occurs, and a braking force is applied to the rotor of the electric motor 76 during rotation through inertia.

In the first to fourth embodiments, an activation timing of the electric motor driving process may be, for example, a timing when the control circuit 14 is activated, that is, a timing when electric power is supplied to various components of the electric power tool 1.

Moreover, although the present teachings are applied to an electric power tool configured as a brush cutter in the first to fourth embodiments, the present teachings may be applied to an electric power tool in a different form, such as a grinder.

## Claims

1. An electric power tool (1), comprising:
an electric motor (18; 76) that is adapted to generate a driving force to rotate an object (4) to be driven;
a rotation speed detection device (14, 17; 14A, 75) that is adapted to detect a rotation speed of the electric motor (18; 76);
a brake device (14A) that is adapted to execute braking control to brake the electric motor (18; 76); and
a rotation speed-based activation device (14A) that is adapted to activate the brake device (14A) when a rotation speed detected by the rotation speed detection device (14A, 17; 14A, 75) becomes equal to or less than a specified rotation speed, which is arbitrarily set, after a stop command to shut off an electric current supply to the electric motor (18; 76) is issued.

2. The electric power tool (1) according to claim 1, further comprising a time-based activation device (14A) that is adapted to activate the brake device (14A) when a braking control start time, which is an arbitrarily set time length, has elapsed since the stop command is issued.

3. The electric power tool (1) according to claim 1 or claim 2, further comprising a specified speed setting device (14A) that is adapted to set the specified rotation speed.

4. The electric power tool (1) according to claim 3, further comprising a reduction rate calculation device (14A) that is adapted to sequentially calculate a reduction rate, which is a rate of reduction in the rotation speed of the electric motor (18; 76) during a unit time period, in accordance with a detection result by the rotation speed detection device (14A, 17; 14A, 75),
wherein the specified speed setting device (14A) is adapted to set the specified rotation speed based on the reduction rate calculated by the reduction rate calculation device (14A).

5. The electric power tool (1) according to claim 4, wherein the specified speed setting device (14A) is adapted to set a larger value, as the specified rotation speed, as the reduction rate becomes larger.

6. The electric power tool (1) according to any one of claim 3 to claim 5,
wherein the electric motor (18; 76) is configured to be rotatable in a forward rotation direction and in a reverse rotation direction, and
wherein the specified speed setting device (14A) is adapted to set the specified rotation speed individually for each of the forward rotation direction and the reverse rotation direction.

7. The electric power tool (1) according to claim 2, further comprising a time setting device (14A) that is adapted to set the braking control start time.

8. The electric power tool (1) according to claim 7, further comprising a reduction rate calculation device (14A) that is adapted to sequentially calculate a reduction rate, which is a rate of reduction in the rotation speed of the electric motor (18; 76) during a unit time period, in accordance with a detection result by the rotation speed detection device (14A, 17; 14A, 75),
wherein the time setting device (14A) is adapted to set the braking control start time based on the reduction rate calculated by the reduction rate calculation device (14A).

9. The electric power tool (1) according to claim 8, wherein the time setting device (14A) is adapted to set a shorter time length, as the braking control start time, as the reduction rate becomes larger.

10. The electric power tool (1) according to any one of claim 7 to claim 9, further comprising:
a rotation speed command switch (12) adapted to set a command value of the rotation speed of the electric motor (18; 76); and
a command value obtaining device (14A) that is adapted to obtain the command value set by the rotation speed command switch (12),
wherein the time setting device (14A) is adapted to set the braking control start time based on an off-time rotation speed, which is a rotation speed when the command value obtained by the command value obtaining device (14A) becomes within a stop range where it is regarded that stopping of the electric motor (18; 76) is commanded.

11. The electric power tool (1) according to claim 10, wherein the time setting device (14A) is adapted to set a longer time length, as the braking control start time, as the off-time rotation speed becomes larger.

12. The electric power tool (1) according to claim 10 or claim 11, wherein the time setting device (14A) includes an estimation device (14A) that is adapted to estimate the off-time rotation speed based on the command value obtained by the command value obtaining device (14A).

13. The electric power tool (1) according to claim 12, wherein the estimation device (14A) is adapted to estimate the off-time rotation speed as a larger value as the command value before the specified time, at which the command value becomes within the stop range, becomes larger.

14. The electric power tool (1) according to any one of claim 7 to claim 13,
wherein the object (4) to be driven is selected from among a plurality of types of objects (4) to be driven,
wherein the electric power tool (1) is configured such that one of the objects (4) to be driven selected from among the plurality of types of objects (4) to be driven is attachable thereto, and
wherein the time setting device (14A) is adapted to set, as the braking control start time of the electric power tool (1), a braking control start time corresponding to an object (4) to be driven having a maximum inertia among the plurality of types of objects (4) to be driven.

15. The electric power tool (1) according to any one of claim 7 to claim 14,
wherein the electric motor (18; 76) is configured to be rotatable in a forward rotation direction and in a reverse rotation direction, and
wherein the time setting device (14A) is adapted to set the braking control start time individually for each of the forward rotation and the reverse rotation.

16. The electric power tool (1) according to any one of claim 1 to claim 15, further comprising a driving force transmission mechanism (6, 21) that is adapted to transmit the driving force of the electric motor (18; 76) to the object (4) to be driven.

## Patentansprüche

1. Elektrisches Kraftwerkzeug (1), mit
einem elektrischen Motor (18; 76), der zum Erzeugen einer Antriebskraft zum Drehen eines anzutreibenden Gegenstandes (4) angepasst ist,
einer Drehzahlerfassungsvorrichtung (14, 17; 14A, 75), die zum Erfassen einer Drehzahl des elektrischen Motors (18; 76) angepasst ist,
einer Bremsvorrichtung (14A), die dazu angepasst ist, eine Bremssteuerung zum Bremsen des elektrischen Motors (18; 76) auszuführen, und
einer drehzahlbasierenden Aktivierungsvorrichtung (14A), die zum Aktivieren der Bremsvorrichtung (14A) angepasst ist, wenn eine Drehzahl, die durch die Drehzahlerfassungsvorrichtung (14A, 17; 14A, 75) erfasst wird, gleich oder geringer als eine spezifische Drehzahl wird, welche beliebig festgelegt wird, nachdem einem Stoppbefehl zum Abschalten einer Zufuhr von elektrischem Strom an den elektrischen Motor (18; 76) ausgegeben wird.

2. Elektrisches Kraftwerkzeug (1) nach Anspruch 1, das ferner eine zeitbasierende Aktivierungsvorrichtung (14A) aufweist, die zum Aktivieren der Bremsvorrichtung (14A) angepasst ist, wenn eine Bremssteuerungsstartzeit, welche eine beliebige festgelegte Zeitdauer ist, seit der Ausgabe des Stoppbefehls verstrichen ist.

3. Elektrisches Kraftwerkzeug (1) nach Anspruch 1 oder 2, das ferner eine Spezifische-Drehzahl-Festlegungsvorrichtung (14A) aufweist, die dazu angepasst ist, die spezifische Drehzahl festzulegen.

4. Elektrisches Kraftwerkzeug (1) nach Anspruch 3, das ferner eine Verringerungsratenberechnungsvorrichtung (14A) aufweist, die dazu angepasst ist, sequentiell eine Verringerungsrate, welche eine Verringerungsrate der Drehzahl des elektrischen Motors (18; 76) während einer Zeiteinheitsdauer ist, gemäß einem Erfassungsergebnis der Drehzahlerfassungsvorrichtung (14A, 17; 14A, 75) zu berechnen,
bei dem die Spezifische-Drehzahlfestlegungsvorrichtung (14A) dazu angepasst ist, die spezifische Drehzahl basierend auf der Verringerungsrate, das durch die Verringerungsratenberechnungsvorrichtung (14A) berechnet wird, festzulegen.

5. Elektrisches Kraftwerkzeug (1) nach Anspruch 4, bei dem die Spezifische-Drehzahl-Festlegungsvorrichtung (14A) dazu angepasst ist, einen höheren Wert als die spezifische Drehzahl festzulegen, wenn die Verringerungsrate größer wird.

6. Elektrisches Kraftwerkzeug (1) nach einem der Ansprüche 3 bis 5,
bei dem der elektrische Motor (18; 76) dazu konfiguriert ist, in einer Vorwärtsdrehrichtung und einer Rückwärtsdrehrichtung drehbar zu sein, und
bei dem die Spezifische-Drehzahl-Festlegungsvorrichtung (14A) dazu angepasst ist, die spezifische Drehzahl individuell für jede von der Vorwärtsdrehrichtung und der Rückwärtsdrehrichtung festzulegen.

7. Elektrisches Kraftwerkzeug (1) nach Anspruch 2, das ferner eine Zeitfestlegungsvorrichtung (14A) aufweist, die zum Festlegen der Bremssteuerungsstartzeit angepasst ist.

8. Elektrisches Kraftwerkzeug (1) nach Anspruch 7, das ferner eine Verringerungsratenberechnungsvorrichtung (14A) aufweist, die zum sequentiellen Berechnen einer Verringerungsrate, welche eine Verringerungsrate der Drehzahl des elektrischen Motors (18; 76) während einer Zeiteinheitsdauer ist, gemäß einem Erfassungsergebnis der Drehzahlerfassungsvorrichtung (14A, 17; 14A, 75), angepasst ist,
bei dem die Zeitfestlegungsvorrichtung (14A) dazu angepasst ist, die Bremssteuerungsstartzeit basierend auf der Verringerungsrate festzulegen, das durch die Verringerungsratenberechnungsvorrichtung (14A) berechnet wird.

9. Elektrisches Kraftwerkzeug (1) nach Anspruch 8, bei dem die Zeitfestlegungsvorrichtung (14A) dazu angepasst ist, eine kürzere Zeitdauer als die Bremssteuerungsstartzeit festzulegen, wenn die Verringerungsrate größer wird.

10. Elektrisches Kraftwerkzeug (1) nach einem der Ansprüche 7 bis 9, das ferner
einen Drehzahlbefehlsschalter (12), der zum Festlegen eines Befehlswertes der Drehzahl des elektrischen Motors (18; 76) angepasst ist, und
eine Befehlswertabfragevorrichtung (14A) aufweist, die dazu angepasst ist, den Befehlswert, der durch den Drehzahlbefehlsschalter (12) festgelegt wird, abzufragen,
bei dem die Zeitfestlegungsvorrichtung (14A) dazu angepasst ist, die Bremssteuerungsstartzeit basierend auf einer Ausschaltzeit-Drehzahl festzulegen, welche eine Drehzahl ist, wenn der Befehlswert durch die Befehlswertabfragevorrichtung (14A) abgefragt wird, innerhalb eines Stoppbereiches liegt, bei welchem es angenommen wird, dass das Stoppen des elektrischen Motors (18; 76) befohlen wird.

11. Elektrisches Kraftwerkzeug (1) nach Anspruch 10, bei dem die Zeitfestlegungsvorrichtung (14A) dazu angepasst ist, eine längere Zeitdauer als die Bremssteuerungsstartzeit festzulegen, wenn die Ausschaltzeit-Drehzahl größer wird.

12. Elektrisches Kraftwerkzeug (1) nach Anspruch 10 oder Anspruch 11, bei dem die Zeitfestlegungsvorrichtung (14A) eine Abschätzvorrichtung (14A) aufweist, die dazu angepasst ist, die Ausschaltzeit-Drehzahl basierend auf dem Befehlswert, der durch die Befehlswertabfragevorrichtung (14A) abgefragt wird, abzuschätzen.

13. Elektrisches Kraftwerkzeug (1) nach Anspruch 12, bei dem die Abschätzvorrichtung (14A) dazu angepasst ist, die Ausschaltzeit-Drehzahl als einen größeren Wert abzuschätzen, wenn der Befehlswert vor der spezifizierten Zeit, zu der der Befehlswert innerhalb des Stoppbereiches liegt, größer wird.

14. Elektrisches Kraftwerkzeug (1) nach einem der Ansprüche 7 bis 13,
bei dem der anzutreibende Gegenstand (4) aus einer Mehrzahl von Arten von anzutreibenden Gegenständen (4) gewählt wird,
bei dem das elektrische Kraftwerkzeug (1) so konfiguriert ist, dass einer der anzutreibenden Gegenstände, der unter der Mehrzahl von Arten von anzutreibenden Gegenständen (4) gewählt wird, daran anbringbar ist, und
bei dem die Zeitfestlegungsvorrichtung (14A) dazu angepasst ist, als die Bremssteuerungsstartzeit des elektrischen Kraftwerkzeugs (1) eine Bremssteuerungsstartzeit entsprechend einem anzutreibenden Gegenstandes (4) festzulegen, der eine maximale Trägheit unter der Mehrzahl von Arten von anzutreibenden Gegenständen (4) aufweist.

15. Elektrisches Kraftwerkzeug (1) nach einem der Ansprüche 7 bis 14,
bei dem der elektrische Motor (18; 76) dazu konfiguriert ist, das er in einer Vorwärtsrichtung und einer Rückwärtsrichtung drehbar ist, und
bei dem die Zeitfestlegungsvorrichtung (14A) dazu angepasst ist, die Bremssteuerungsstartzeit individuell für jede von der Vorwärtsrichtung und der Rückwärtsrichtung festzulegen.

16. Elektrisches Kraftwerkzeug (1) nach einem der Ansprüche 1 bis 15, das ferner einen Antriebskraftübertragungsmechanismus (6, 21) aufweist, der dazu angepasst ist, die Antriebskraft des elektrischen Motors (18; 76) dem anzutreibenden Gegenstand (4) zu übertragen.

## Revendications

1. Outil motorisé électrique (1), comprenant :
un moteur électrique (18 ; 76) qui est adapté pour générer une force d'entraînement afin de tourner un objet (4) à entraîner ;
un dispositif de détection de vitesse de rotation (14, 17 ; 14A, 75) qui est adapté pour détecter une vitesse de rotation du moteur électrique (18 ; 76) ;
un dispositif de freinage (14A) qui est adapté pour exécuter une commande de freinage afin de freiner le moteur électrique (18 ; 76) ; et
un dispositif d'activation basé sur la vitesse de rotation (14A) qui est adapté pour activer le dispositif de freinage (14A) lorsqu'une vitesse de rotation détectée par le dispositif de détection de vitesse de rotation (14A, 17 ; 14A, 75) devient égale ou inférieure à une vitesse de rotation spécifiée qui est arbitrairement définie après qu'une commande d'arrêt pour éteindre une alimentation en courant électrique au moteur électrique (18 ; 76) a été émise.

2. Outil motorisé électrique (1) selon la revendication 1, comprenant en outre un dispositif d'activation basé sur le temps (14A) qui est adapté pour activer le dispositif de freinage (14A) lorsqu'un temps de démarrage de commande de freinage, qui est une longueur de temps définie arbitrairement, s'est écoulé depuis que la commande d'arrêt a été émise.

3. Outil motorisé électrique (1) selon la revendication 1 ou la revendication 2, comprenant en outre un dispositif de définition de vitesse spécifiée (14A) qui est adapté pour définir la vitesse de rotation spécifiée.

4. Outil motorisé électrique (1) selon la revendication 3, comprenant en outre un dispositif de calcul de taux de réduction (14A) qui est adapté pour calculer séquentiellement un taux de réduction, qui est un taux de réduction dans la vitesse de rotation du moteur électrique (18 ; 76) pendant une période de temps unitaire selon un résultat de détection par le dispositif de détection de vitesse de rotation (14A, 17 ; 14A, 75),
dans lequel le dispositif de définition de vitesse spécifiée (14A) est adapté pour définir la vitesse de rotation spécifiée sur la base du taux de réduction calculé par le dispositif de calcul de taux de réduction (14A).

5. Outil motorisé électrique (1) selon la revendication 4, dans lequel le dispositif de définition de vitesse spécifiée (14A) est adapté pour définir une valeur plus grande que la vitesse de rotation spécifiée lorsque le taux de réduction augmente.

6. Outil motorisé électrique (1) selon l'une quelconque de la revendication 3 à la revendication 5,
dans lequel le moteur électrique (18 ; 76) est configuré pour être rotatif dans une direction de rotation vers l'avant et dans une direction de rotation inverse, et
dans lequel le dispositif de définition de vitesse spécifiée (14A) est adapté pour définir la vitesse de rotation spécifiée individuellement pour chacune de la direction de rotation vers l'avant et la direction de rotation inverse.

7. Outil motorisé électrique (1) selon la revendication 2, comprenant un dispositif de définition de temps (14A) qui est adapté pour définir le temps de démarrage de commande de freinage.

8. Outil motorisé électrique (1) selon la revendication 7, comprenant en outre un dispositif de calcul de taux de réduction (14A) qui est adapté pour calculer séquentiellement un taux de réduction qui est un taux de réduction dans la vitesse de rotation du moteur électrique (18 ; 76) pendant une période de temps unitaire, selon un résultat de détection par le dispositif de détection de vitesse de rotation (14A, 17 ; 14A, 75),
dans lequel le dispositif de définition de temps (14A) est adapté pour définir le temps de démarrage de commande de freinage sur la base du taux de réduction calculé par le dispositif de calcul de taux de réduction (14A).

9. Outil motorisé électrique (1) selon la revendication 8, dans lequel le dispositif de définition de temps (14A) est adapté pour définir une longueur de temps plus courte que le temps de démarrage de commande de freinage lorsque le taux de réduction augmente.

10. Outil motorisé électrique (1) selon l'une quelconque de la revendication 7 à la revendication 9, comprenant en outre :
un commutateur de commande de vitesse de rotation (12) adapté pour définir une valeur de commande de la vitesse de rotation du moteur électrique (18 ; 76) ; et
un dispositif d'obtention de valeur de commande (14A) qui est adapté pour obtenir la valeur de commande définie par le commutateur de commande de vitesse de rotation (12),
dans lequel le dispositif de définition de temps (14A) est adapté pour définir le temps de démarrage de commande de freinage sur la base d'une vitesse de rotation de temps d'arrêt qui est une vitesse de rotation lorsque la valeur de commande obtenue par le dispositif d'obtention de valeur de commande (14A) se trouve dans une plage d'arrêt où il est considéré que l'arrêt du moteur électrique (18 ; 76) est commandé.

11. Outil motorisé électrique (1) selon la revendication 10, dans lequel le dispositif de définition de temps (14A) est adapté pour définir une longueur de temps plus longue que le temps de démarrage de commande de freinage lorsque la vitesse de rotation de temps d'arrêt augmente.

12. Outil motorisé électrique (1) selon la revendication 10 ou 11, dans lequel le dispositif de définition de temps (14A) inclut un dispositif d'estimation (14A) qui est adapté pour estimer la vitesse de rotation de temps d'arrêt sur la base de la valeur de commande obtenue par le dispositif d'obtention de valeur de commande (14A).

13. Outil motorisé électrique (1) selon la revendication 12, dans lequel le dispositif d'estimation (14A) est adapté pour estimer la vitesse de rotation de temps d'arrêt lorsqu'une valeur plus grande que la valeur de commande avant le temps spécifié, auquel la valeur de commande devient dans la plage d'arrêt, augmente.

14. Outil motorisé électrique (1) selon l'une quelconque de la revendication 7 à la revendication 13,
dans lequel l'objet (4) à entraîner est sélectionné parmi une pluralité de types d'objet (4) à entraîner,
dans lequel l'outil motorisé électrique (1) est configuré de sorte qu'un des objets (4) à entraîner sélectionné parmi la pluralité de types d'objets (4) à entraîner est attachable à celui-ci, et
dans lequel le dispositif de définition de temps (14A) est adapté pour définir en tant que temps de démarrage de commande de freinage de l'outil motorisé électrique (1), un temps de démarrage de commande de freinage correspondant à un objet (4) à entraîner présentant une inertie maximum parmi la pluralité de types d'objets (4) à entraîner.

15. Outil motorisé électrique (1) selon l'une quelconque de la revendication 7 à la revendication 14,
dans lequel le moteur électrique (18 ; 76) est configuré pour être rotatif dans une direction de rotation vers l'avant et dans une direction de rotation inverse, et
dans lequel le dispositif de définition de temps (14A) est adapté pour définir le temps de démarrage de commande de freinage individuellement pour chacune de la rotation vers l'avant et la rotation inverse.

16. Outil motorisé électrique (1) selon l'une quelconque de la revendication 1 à la revendication 15, comprenant en outre un mécanisme de transmission de force d'entraînement (6, 21) qui est adapté pour transmettre la force d'entraînement du moteur électrique (18 ; 76) à l'objet (4) à entraîner.
